Europäisches Patentamt

European Patent Office

Office européen des brevets

(19)

(11) Publication number : **0 383 580 B1**

# EUROPEAN PATENT SPECIFICATION

(12)

(45) Date of publication of patent specification :
24.11.93 Bulletin 93/47

(51) Int. Cl.5 : **C08J 5/18**, C08K 3/22,
C08K 3/34, F16F 15/02,
// (C08J5/18, C08L95:00,
31:04)

(21) Application number : 90301587.3

(22) Date of filing : 14.02.90

(54) **Vehicle damping sheet.**

(30) Priority : 15.02.89 JP 35838/89
17.05.89 JP 125120/89

(43) Date of publication of application :
22.08.90 Bulletin 90/34

(45) Publication of the grant of the patent :
24.11.93 Bulletin 93/47

(84) Designated Contracting States :
DE FR GB IT

(56) References cited :
DE-A- 1 594 052
GB-A- 1 310 241
US-A- 3 994 845
PATENT ABSTRACTS OF JAPAN, unexamined
applications, C field, vol. 10, no. 78, March 27,
1986 THE PATENT OFFICE JAPANESE GOV-
ERNMENT Page 76 C 335

(73) Proprietor : TODA KOGYO CORP.
7-1 Yokogawa-Shinmachi Nishi-ku
Hiroshima-shi Hiroshima-ken (JP)

(72) Inventor : Toda, Tetsuro
3-18-103 Inokuchi, Nishi-ku
Hiroshima-shi, Hiroshima-ken (JP)
Inventor : Kishimoto, Atsunori
1763-4 Misonou, Saijo-cho
Higashi, Hiroshima-shi, Hiroshima-ken (JP)

(74) Representative : Woods, Geoffrey Corlett et al
J.A. KEMP & CO. 14 South Square Gray's Inn
London WC1R 5EU (GB)

EP 0 383 580 B1

## Description

The present invention relates to a vehicle damping sheet, for example applicable to floors or dash panels of automobiles and, in particular, to a light-weight vehicle damping sheet having a high damping effect.

As is well known, damping material has generally been used for various applications to protect precision equipment against vibrations, for damping vibrations of engines in, for example, vehicles and for damping vibrations of floors and walls in buildings or houses.

As damping sheets used for a vehicle damping material, there have been proposed damping sheets comprising blends of inorganic fillers such as carbonate, mica and clay, and as a binder, bituminous material such as asphalt (JP-A-63-156859 (1988) and JP-B-52-50522 (1977)) as well as noise-insulation sheets comprising blends of a thermoplastic resin such as vinyl chloride resin as a binder; iron or iron oxide; and silicon oxide (JP-A-61-57632 (1986)). There have been further proposed damping sheets comprising blends of an epoxy resin as the binder; iron oxide or iron oxide and mica (JP-A-60-215013 (1985), JP-A-60-215014 (1985), JP-A-61-103977 (1985), JP-A-61-151227 (1986), and JP-A-63-178037 (1988)).

In particular JP-A-60-215013 (1985) discloses a damping material comprising a composition composed of 100 parts by weight of an epoxy resin and a curing agent; 0.1 to 70 parts by weight of a different polymeric material such as a nitrile rubber, butadiene rubber, polyethylene, polypropylene and modified polyethylene; 40 to 900 parts by weight of a granular iron oxide such as $Fe_2O_3$ and $Fe_3O_4$; 0.5 to 50 parts by weight of a fibrous material such as asbestos and a polyamide; and 0.5 to 50 parts by weight of a flaky filler such as mica, graphite flakes and alumina flakes.

Furthermore JP-A-61-151227 (1986) discloses a damping material comprising a composition composed of 100 parts by weight of an epoxy resin and a curing agent; 50 to 500 parts by weight of a flaky filler such as mica, alumina flakes and iron oxide flakes ; 0.5 to 200 parts by weight of a granular filler such as calcium carbonate, talc and ferrite; 0.5 to 100 parts by weight of a fibrous material such as asbestos, polyamide fibers and carbon fibers; and 80 to 300 parts by weight of a plasticizer.

Generally, the damping effect of a damping sheet has a close relationship with the loss of viscosity of the damping sheet. In order to increase the damping effect, there has been adopted, for example, a method of controlling the composition of the damping sheet so as to increase the viscosity loss, or increasing the thickness of the damping sheet.

In addition, the damping effect can also be improved by increasing the weight of the damping sheet and, in this case, there has been adopted a method of adding a large amount of a high density filler.

That is, for improving the damping effect, conventional damping sheets have usually been manufactured by controlling the composition so as to increase the viscosity loss, increasing the thickness of the damping sheet or incorporating a large amount of various fillers to increase the weight thereof.

However, when a damping sheet with increased thickness and weight is used for vehicles such as automobiles, it increases the weight of the vehicle and is not suitable for vehicles for which a light weight thereof is demanded. in the case of manufacturing a damping sheet incorporating a large amount of filler, since the damping effect can be improved,
particularly, by increasing the content of the filler, the desired damping effect can be obtained even when the thickness of the sheet is reduced as compared with the case of a sheet containing a lesser amount of filler. However as a result, various problems such as worsening of the physical properties of the damping sheet and the fusing property, and, furthermore, lowering of productivity due to the increased mechanical abrasion upon manufacturing the sheet, occur.

For obtaining a vehicle damping sheet of a light weight vehicle damping material having a high damping effect within a wide temperature range, the present inventors have studied the damping effect of a damping sheet prepared by molding a blend-mixture comprising a filler and a binder into a sheet, as well as the relationship between the filler and the binder as the starting materials. It has been found that a vehicle damping sheet having a light weight and a high damping effect within a wide temperature range can be obtained by:

selecting a combination of mica and iron oxides particles as one of the fillers,

selecting as a binder those (1) containing a bituminous material, or (2) containing an ethylene-vinyl acetate copolymer and/or polyvinyl acetate, and

adjusting the mixing ratio of the components to within particular limits.

The present invention provides a vehicle damping sheet comprising a blend-mixture comprising (1) a filler composed of mica, iron oxide particles and an auxiliary filler, and (2) a binder comprising (a) a bituminous material or (b) an ethylene-vinyl acetate copolymer, polyvinyl acetate or a mixture thereof,

each of the amounts of said mica, said iron oxide particles and said auxiliary filler being not less than 5 parts by weight per 100 parts by weight of said binder; the total amount of said mica, said iron oxide particles and said auxiliary filler being not less than 30 parts by weight per 100 parts by weight of said binder; and the

2

content of said iron oxide particles in said blend-mixture being from 2 to 40% by weight.

When the binder comprises a bituminous material, the blend mixture preferably comprises from 5 to 100 parts by weight, per 100 parts by weight of binder, of each of said mica, said iron oxide particles and said auxiliary filler. When the binder comprises an ethylene-vinyl acetate copolymer, polyvinyl acetate or a mixture thereof, the blend mixture preferably comprises from 5 to 300 parts by weight, per 100 parts by weight of binder, of each of said mica, said iron oxide particles and said auxiliary filler.

Fig. 1 shows the loss coefficient ($\eta$) of the vehicle damping sheets at each temperature obtained by Reference Examples 1 - 3;

Fig. 2 shows the loss coefficient ($\eta$) of the vehicle damping sheets at each temperature obtained by Example 1 and Reference Examples 1 - 3; and

Fig. 3 shows the loss coefficient ($\eta$) of the vehicle damping sheets at each temperature obtained by Example 13 and Comparative Example 4.

The binder used in the present invention comprises (a) a bituminous material or (b) an ethylene - vinyl acetate copolymer, polyvinyl acetate or a mixture thereof.

As the bituminous material asphalts, more specifically, straight asphalt, blown asphalt, semi-blown asphalt, Trinidad asphalt and lake asphalt produced abundantly in Europe, may be exemplified. They may be used alone or as a mixture thereof for conforming with beats of vehicle floors depending on the shape thereof.

A binder containing not less than 20% by weight, more preferably from 20 to 80% by weight, of the bituminous material is preferred. If it is less than 20% by weight, heat bondability of the damping sheet to steel plate materials of a vehicle tends to be reduced.

The other binder comprises an ethylene-vinyl acetate copolymer, polyvinyl acetate or a mixture thereof. They may be used alone or as a mixture thereof for conforming with the shape of a vehicle floor, for example, conforming with beats of floor portions. In the ethylene-vinyl acetate copolymers the vinyl acetate content is preferably from 25 to 50%.

It is preferred that the binder contains not less than 5% by weight, more preferably not less than 10% by weight, of the ethylene - vinyl acetate copolymers and/or polyvinyl acetate. If the content is less than 5% by weight, heat bondability of the damping sheet to a steel plate of a vehicle tends to be reduced and the sheeting upon production of the damping sheet is difficult.

In the case where cold proofness or weather proofness is poor and heat bondability to a steel plate is insufficient when only the bituminous material is used as the binder, the bituminous material can be modified by adding a polymeric material. Also, in a case of using the ethylene-vinyl acetate copolymers and/or polyvinyl acetate, since the cost is generally increased as the content of the vinyl acetate is increased, a polymeric material other than the ethylene-vinyl acetate copolymer may be added. This reduces the cost of the damping sheet and can also change the peaks of the damping effect at a predetermined temperature.

As the polymeric material used in the present invention, rubbers such as natural rubber, nitrile rubber, isoprene rubber, butyl rubber, acryl rubber, urethane rubber, styrene-butadiene rubber, styrene-isobutylene rubber, ethylene-propylene rubber and chloroprene rubber or modified products thereof; as well as petroleum resin, terpene resin, rosin resin, cumaron resin and phenol resin may be exemplified. Among them, petroleum resin, terpene resin, rosin resin, cumaron resin and phenol resin can increase the heat bondability to the steel plate and, at the same time, can vary the peaks of the damping effect between 20 - 50°C, for example by changing the molecular weight and softening point of the resin used. These are useful to obtain a damping sheet effective within a temperature range required for, for example, floors and dash panels of automobiles.

In order to vary the peaks for the loss coefficient and improve the dispersibility, an additive may be further added. As the additive used in the present invention, process oil, DOP, stearic acid, Zn stearate, Mg stearate and Ca stearate may be exemplified. These are used alone or as a mixture thereof at a ratio of not more than 20% by weight in the binder material. In particular, a naphthenic or aromatic process oil can improve the cold proofness of the damping sheet and can vary the peaks for the damping effect within about a 10°C range.

As the mica used in the present invention, white mica or black mica may be exemplified. The size thereof is preferably not greater than 350 μm, more preferably from 50 to 350 μm.

The blending amount of mica, in a case where the binder comprising bituminous material is used, is not less than 5 parts by weight, preferably from 5 to 100 parts by weight, more preferably from 20 to 100 parts by weight, per 100 parts by weight of the binder.

If it is less than 5 parts by weight, a sufficient damping effect cannot be obtained. On the other hand, if it exceeds 100 parts by weight, the damping effect is saturated and, at the same time, the productivity upon forming the damping sheet tends to be reduced.

The blending amount of mica, in a case where the binder comprising an ethylene - vinyl acetate copolymer, polyvinyl acetate or a mixture thereof is used, is not less than 5 parts by weight, preferably from 5 to 300 parts by weight, more preferably from 200 to 300 parts by weight, per 100 parts by weight of the binder. If it is less than 5 parts by weight, a sufficient damping effect cannot be obtained. On the other hand, if it exceeds 300 parts by weight, the damping effect is saturated and, at the same time, the productivity upon forming the damping sheet tends to be reduced.

As the iron oxide particles used in the present invention, $\alpha$-FeOOH particles, $\gamma$-FeOOH particles, $\delta$-FeOOH particles, FeO particles, $\alpha$-Fe$_2$O$_3$ particles, $\gamma$-Fe$_2$O$_3$ particles, Fe$_3$O$_4$ particles and sintered particles thereof, as well as spinel ferrite particles containing metals such as Zn, Mn, Co, Ni, Cu, Mg and Li may be exemplified. They are used alone or as a mixture thereof. The use of a Fe$_3$O$_4$ and $\gamma$-Fe$_2$O$_3$ particles are preferred. The preferred particle size is from 0.05 to 100 $\mu$m, more preferably from 0.05 to 10 $\mu$m, and most preferably from 0.1 to 1 $\mu$m in view of the properties thereof and the economical advantage.

The blending amount of the iron oxide particles, in a case where the binder comprises bituminous material is used, is not less than 5 parts by weight, preferably from 5 to 100 parts by weight, more preferably from 5 to 80 parts by weight per 100 parts by weight of the binder. If it is less than 5 parts by weight, a sufficient damping effect cannot be obtained. On the other hand, if it exceeds 100 parts by weight, the damping effect is saturated and, at the same time, the productivity upon forming the damping sheet tends to be reduced.

The blending amount of the iron oxide particles, in a case where the binder comprises an ethylene-vinyl acetate copolymers, polyvinyl acetate or a mixture thereof is used, is not less than 5 parts by weight, preferably from 5 to 300 parts by weight, more preferably from 5 to 150 parts by weight per 100 parts by weight of the binder. If it is less than 5 parts by weight, a sufficient damping effect cannot be obtained. On the other hand, if it exceeds 300 parts by weight, the damping effect is saturated and, at the same time, the productivity upon forming the damping sheet tends to be reduced.

As the auxiliary filler used in the present invention, calcium carbonate, clay, talc, barium sulfate, asbestos, silica ballons, fibrous material such as waste paper, chemical fibers and wood fibers may be exemplified. They are used alone or as a mixture thereof. In particular, the fibrous material such as waste paper, chemical fibers or wood fibers can reduce the flow property of the damping sheet when it is thermally fused to the floor panel of an automobile, thereby preventing disconnection or sagging.

The blending amount of the auxiliary filler, in a case where the binder comprising the bituminous material is used, is not less than 5 parts by weight, preferably from 5 to 100 parts by weight, more preferably from 10 to 100 parts by weight per 100 parts by weight of the binder. If it is less than 5 parts by weight, a sufficient damping effect cannot be obtained. On the other hand, if it exceeds 100 parts by weight, the damping effect is saturated and, at the same time, the productivity or workability upon forming the damping sheet tends to be reduced.

The blending amount of the auxiliary filler, in a case where the binder comprising an ethylene-vinyl acetate copolymers, polyvinyl acetate or mixture thereof is used, is not less than 5 parts by weight, preferably from 5 to 300 parts by weight, more preferably from 5 to 150 parts by weight per 100 parts by weight of the binder. If it is less than 5 parts by weight, a sufficient damping effect cannot be obtained. On the other hand, if it exceeds 300 parts by weight, the damping effect is saturated and, at the same time, the productivity upon forming the damping sheet tends to be reduced.

The total amount of the mica, the iron oxide particles and the auxiliary filler is not less than 30 parts by weight, preferably from 50 to 200 parts by weight, per 100 parts by weight of the binder. If it is less than 30 parts by weight, a sufficient damping effect cannot be obtained.

The content of the iron oxide particles in said blend-mixture is from 2 to 40% by weight, preferably from 5 to 30% by weight. If it is less than 2% by weight, a sufficient damping effect cannot be obtained. On the other hand, if it exceeds 40% by weight, it is not practical since machinery parts such as rolls suffer from abrasion upon manufacturing the damping sheet. Additionally the physical properties of the sheet are worsened and the workability upon mounting the sheet to the vehicle is also reduced.

For obtaining a more excellent damping effect, it is preferable to use a blending ratio (by weight) of the iron oxide particles to mica of from 0.1 - 10 : 1.

The vehicle damping sheet according to the present invention has excellent properties such as a high damping effect, light weight and wide working temperature range due to the blend of mica, iron oxide particles and the auxiliary filler in predetermined amounts.

The damping sheet according to the present invention has a damping effect from 2 to 4 times as high as conventional products, and so the thickness can be reduced to 1/2 to 1/3 when a damping sheet having a damping effect comparable with that of the conventional product is manufactured. Thus the weight of the sheet can be reduced.

Furthermore the vehicle damping sheet according to the present invention has excellent sheet property and has improved workability upon mounting to vehicles.

The present invention is now further described in the Examples and Comparative Examples.

The loss coefficient ($\eta$) was measured by a resonance method. The bending test was conducted by winding a calender-roller sheet around a round rod of 1 inch (2.54 cm) outer diameter and the bending resistance was judged based on the absence or presence of cracks at the surface of the sheet.

Example 1

To a binder of 60 parts by weight of blown asphalt and 40 parts by weight of petroleum resin, a filler of 10 parts by weight of $Fe_3O_4$ particles (size: 0.3 $\mu$m) as the iron oxide particles, 65 parts by weight of mica (size: 150 $\mu$m), 25 parts by weight of calcium carbonate, 5 parts by weight of waste paper and 10 parts by weight of a process oil was added and blended. After mixing under heating the blend in a dispersion mixer at 200°C $\pm$ 20°C for 10 min., the thus obtained blend-mixture was rolled spread by a calender roll to prepare a vehicle damping sheet of 2 mm thickness.

The resultant vehicle damping sheet was cut into a piece of 15 mm width and 270 mm length, set on a 0.8 mm thick steel plate substrate (15 x 300 mm) and fused under heating at 150°C for 30 min. to obtain a test specimen. The loss coefficient ($\eta$) of each specimen at each temperature was obtained by a resonance method. The results are as shown in Table 1. The products had excellent damping effect and bending resistance.

Examples 2 - 6, Comparative Examples 1 - 3, Reference Examples 1 - 3

After manufacturing vehicle damping sheets using the same procedures as in Example 1 except for using materials having compositions each shown in Table 1, test specimens for evaluating the damping effect were obtained. The loss coefficient ($\eta$) at each temperature of the test specimen was as shown in Table 1.

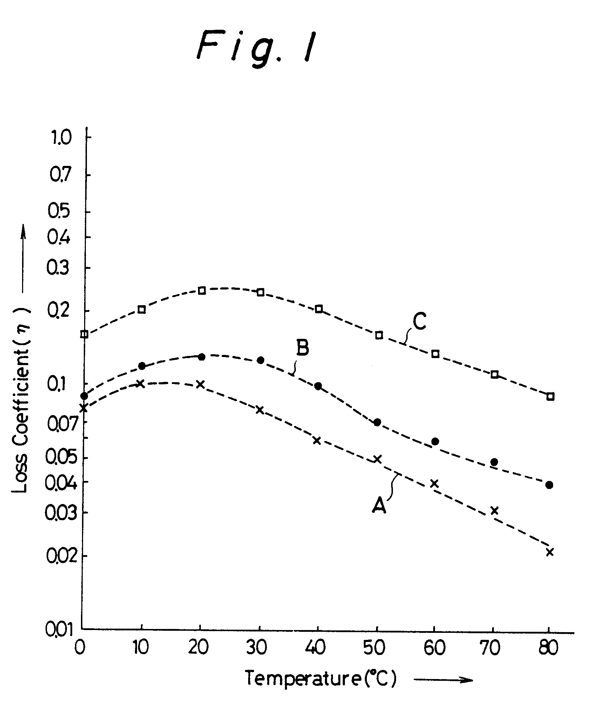

The damping sheets of the Reference Examples 1 to 3 are those produced by using known calcium carbonate as a filler and have thicknesses of 2 mm (Reference Example 1), 3 mm (Reference Example 2) and 6 mm (Reference Example 3). The relationships of the loss coefficient of the damping sheets of Reference Examples 1 to 3 and the temperature are shown in Fig. 1. In Fig. 1, curve A denotes Reference Example 1, curve B denotes Reference Example 2 and curve C denotes Reference Example 3. As seen from Fig. 1, it is clear that the loss coefficient of the damping sheet is improved, as the damping sheet becomes thicker.

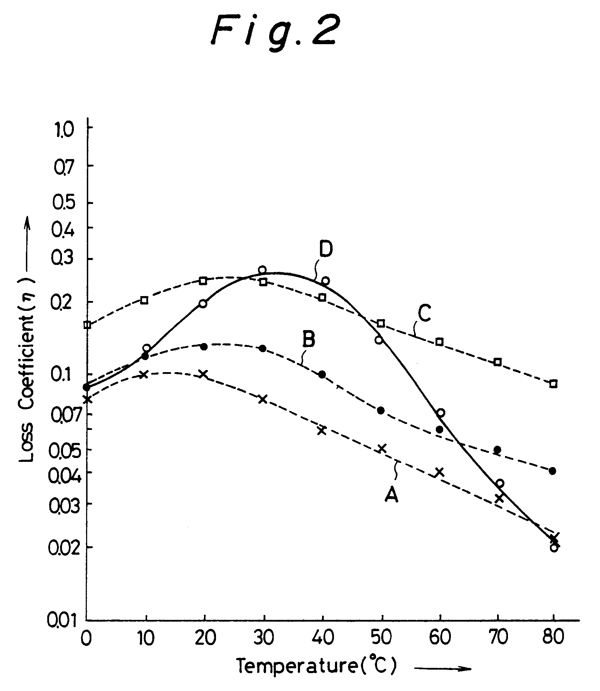

Fig. 2 shows the loss coefficient of the damping sheets of Reference Examples 1 to 3 and Example 1, in which the amount of the filler of the damping sheet of Example 1 approximates to that of Reference Example 1 and the thickness of the damping sheet of Example 1 is 2 mm. In Fig. 2, curve D denotes Example 1. As seen from Fig. 2, it is clear that the loss coefficient of the damping sheet of Example 1 is equal to or higher than that of Reference Example 3, whereas the thickness of the damping sheet of Reference Example 3 is 3 times as large as that of Example 1 and the damping sheet of Example 1 has a damping effect 3 times as high as the conventional damping sheet (Reference Example 1).

This fact means that in order to obtain the same damping effect as the conventional products, the thickness of the damping sheet can be reduced to 1/3.

Also, as seen from curves A and D in Fig. 2, the peak value of the loss coefficient of Example 1 not only was improved, but the loss coefficient was entirely improved within a wide temperature range and accordingly a higher and more efficient damping effect was obtained within the wide temperature range.

## Table 1

| | Ex. 1 | Ex. 2 | Ex. 3 | Ex. 4 | Ex. 5 | Ex. 6 | Reference Ex. 1 | Reference Ex. 2 | Reference Ex. 3 | Compara. Ex. 1 | Compara. Ex. 2 | Compara. Ex. 3 |
|---|---|---|---|---|---|---|---|---|---|---|---|---|
| Blown asphalt | 60 | 60 | 60 | 60 | 60 | 70 | 60 | 60 | 60 | 60 | 60 | 60 |
| Petroleum resin | 40 | 40 | 40 | 40 | 40 | 30 | 40 | 40 | 40 | 40 | 40 | 40 |
| Mica | 65 | 65 | 65 | 20 | 80 | 65 | — | — | — | 60 | 2 | 60 |
| $Fe_3O_4$ | 10 | 30 | — | 80 | 20 | — | — | — | — | — | 70 | 130 |
| $\gamma\text{-}Fe_2O_3$ | — | — | 30 | — | — | 30 | — | — | — | — | — | — |
| Calcium carbonate | 25 | 25 | 25 | 25 | 25 | 25 | 95 | 95 | 95 | 25 | 25 | 25 |
| Waste paper | 5 | 5 | 5 | 5 | 5 | 5 | 5 | 5 | 5 | 5 | 5 | 5 |
| Process oil | 10 | 10 | 5 | 10 | 10 | 10 | 10 | 10 | 10 | 10 | 10 | 10 |
| Thickness of sheet (mm) | 2 | 2 | 2 | 2 | 2 | 2 | 2 | 3 | 6 | 2 | 2 | 2 |
| Loss coefficient (η) 0°C | 0.09 | 0.07 | 0.05 | 0.08 | 0.09 | 0.09 | 0.08 | 0.09 | 0.16 | 0.09 | 0.10 | 0.12 |
| 10°C | 0.12 | 0.14 | 0.08 | 0.12 | 0.12 | 0.16 | 0.10 | 0.12 | 0.20 | 0.10 | 0.13 | 0.15 |
| 20°C | 0.21 | 0.20 | 0.14 | 0.18 | 0.15 | 0.24 | 0.10 | 0.13 | 0.24 | 0.13 | 0.15 | 0.18 |
| 30°C | 0.26 | 0.30 | 0.21 | 0.21 | 0.20 | 0.29 | 0.08 | 0.13 | 0.24 | 0.14 | 0.14 | 0.17 |
| 40°C | 0.25 | 0.23 | 0.30 | 0.16 | 0.22 | 0.21 | 0.06 | 0.10 | 0.21 | 0.13 | 0.11 | 0.13 |
| 50°C | 0.13 | 0.11 | 0.22 | 0.12 | 0.11 | 0.15 | 0.05 | 0.07 | 0.17 | 0.09 | 0.09 | 0.10 |
| 60°C | 0.07 | 0.05 | 0.12 | 0.07 | 0.06 | 0.09 | 0.04 | 0.06 | 0.14 | 0.06 | 0.07 | 0.06 |
| 70°C | 0.03 | 0.03 | 0.06 | 0.05 | 0.03 | 0.04 | 0.03 | 0.05 | 0.12 | 0.04 | 0.05 | 0.04 |
| 80°C | 0.02 | 0.02 | 0.03 | 0.04 | 0.02 | 0.02 | 0.02 | 0.04 | 0.09 | 0.04 | 0.05 | 0.04 |
| Bending resistance of sheet (room temperature) | O | O | O | O | O | O | O | O | Δ | O | O | × |

EP 0 383 580 B1

## Example 7

To a binder of 30 parts by weight of polyvinyl acetate and 70 parts by weight of petroleum resin, a filler of 40 parts by weight of $Fe_3O_4$ particles (size: 0.3 $\mu$m) as the iron oxide particles, 110 parts by weight of mica (size: 150 $\mu$m), 25 parts by weight of calcium carbonate, 10 parts by weight of waste paper and 10 parts by weight of a process oil was added and blended. After mixing under heating the blend in a dispersion mixer at 140°C for 10 min., the thus obtained blend-mixture was rolled spread by a calender rolls to prepare a vehicle damping sheet of 2 mm thickness.

The resultant vehicle damping sheet was cut into a piece of 15 mm width and 270 mm length, set on a 0.8 mm thick steel plate substrate (15 x 300 mm) and fused under heating at 150°C for 30 min. to obtain a test specimen. The loss coefficient ($\eta$) of each specimen at each temperature was obtained by a resonance method. The results are as shown in Table 2. The products had excellent damping effect and bending resistance.

## Examples 8 - 13, comparative Examples 4 - 7

After manufacturing vehicle damping sheets using the same procedures as in Example 7 except for using materials having compositions each shown in Table 2, test specimens for evaluating the damping effect were obtained. The ethylene - vinyl acetate copolymers used in Examples 8 - 12 and Comparative Examples 6 and 7 had a 28% vinyl acetate content. The loss coefficient ($\eta$) of the resultant test specimen at each temperature and the bending resistance of the sheet are as shown in Table 2.

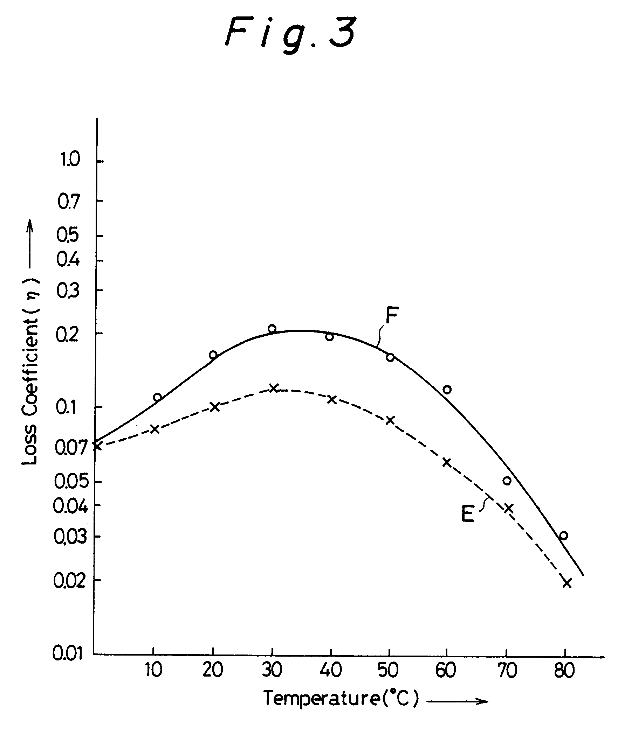

Fig. 3 shows the relationships of the loss coefficient of the damping sheet of Comparative Example 4 and Example 13, and a temperature, in which the amount of the filler of the damping sheet of Example 13 approximates that of Comparative Example 4. In Fig. 3, curve E denotes Comparative Example 4 and curve F denotes Example 13. As seen from Fig. 3, the damping sheet of Example 13 has a damping effect from 2 to 3 times as high as that of Comparative Example 4.

EP 0 383 580 B1

## Table 2

| | | Ex. 7 | Ex. 8 | Ex. 9 | Ex. 10 | Ex. 11 | Ex. 12 | Ex. 13 | Compara. Ex. 4 | Compara. Ex. 5 | Compara. Ex. 6 | Compara. Ex. 7 |
|---|---|---|---|---|---|---|---|---|---|---|---|---|
| E V A* | | — | 30 | 30 | 20 | 50 | 40 | — | — | — | 30 | 30 |
| polyvinyl Vinyl acetate | | 30 | — | — | 10 | — | — | 50 | 50 | 50 | — | — |
| Petroleum resin | | 70 | 70 | 70 | 70 | 50 | 60 | 50 | 50 | 50 | 70 | 70 |
| Mica | | 110 | 110 | 110 | 80 | 30 | 90 | 60 | — | 80 | 2 | 110 |
| $Fe_3O_4$ | | 40 | 40 | — | 40 | 70 | 20 | 20 | — | — | 110 | 220 |
| $\gamma\cdot Fe_2O_3$ | | — | — | 40 | — | — | — | — | — | — | — | — |
| Calcium carbonate | | 25 | 25 | 25 | 25 | 25 | 25 | — | 80 | 20 | 25 | 25 |
| Waste paper | | 10 | 10 | 10 | 10 | 10 | 10 | 10 | 10 | 10 | 10 | 10 |
| Process oil | | 10 | 10 | 10 | 10 | 10 | 10 | 10 | 10 | 10 | 10 | 10 |
| Loss coef- ficient ($\eta$) | 0°C | 0.04 | 0.05 | 0.06 | 0.03 | 0.05 | 0.04 | 0.07 | 0.07 | 0.08 | 0.03 | 0.02 |
| | 10°C | 0.06 | 0.08 | 0.12 | 0.05 | 0.08 | 0.07 | 0.11 | 0.08 | 0.09 | 0.05 | 0.04 |
| | 20°C | 0.10 | 0.12 | 0.23 | 0.09 | 0.12 | 0.10 | 0.16 | 0.10 | 0.11 | 0.11 | 0.10 |
| | 30°C | 0.26 | 0.23 | 0.39 | 0.18 | 0.19 | 0.17 | 0.21 | 0.12 | 0.12 | 0.15 | 0.12 |
| | 40°C | 0.24 | 0.39 | 0.32 | 0.31 | 0.26 | 0.29 | 0.20 | 0.11 | 0.13 | 0.17 | 0.13 |
| | 50°C | 0.21 | 0.33 | 0.21 | 0.25 | 0.20 | 0.22 | 0.16 | 0.09 | 0.10 | 0.14 | 0.11 |
| | 60°C | 0.14 | 0.24 | 0.09 | 0.18 | 0.12 | 0.15 | 0.12 | 0.06 | 0.07 | 0.10 | 0.09 |
| | 70°C | 0.05 | 0.08 | 0.05 | 0.06 | 0.05 | 0.06 | 0.05 | 0.04 | 0.04 | 0.06 | 0.05 |
| | 80°C | 0.03 | 0.03 | 0.03 | 0.03 | 0.03 | 0.03 | 0.03 | 0.02 | 0.03 | 0.02 | 0.03 |
| Bending resistance of sheet (room temperature) | | ○ | ○ | ○ | ○ | ○ | ○ | ○ | ○ | ○ | × | × |

(Note) EVA*: Ethylene-vinylacetate copolymer

## Claims

1. A vehicle damping sheet comprising a blend-mixture comprising:
   (1) a filler composed of mica, iron oxide particles and an auxiliary filler, and
   (2) a binder comprising (a) a bituminous material or (b) an ethylene-vinyl acetate copolymer, polyvinyl acetate or a mixture thereof,
   each of the amounts of said mica, said iron oxide particles and said auxiliary filler being not less than 5 parts by weight per 100 parts by weight of said binder; the total amount of said mica, said iron oxide particles and said auxiliary filler being not less than 30 parts by weight per 100 parts by weight of said binder; and the content of said iron oxide particles in said blend-mixture being from 2 to 40% by weight.

2. A sheet according to claim 1, wherein the blend mixture comprises from 5 to 100 parts by weight, per 100 parts by weight of binder, of each of said mica, said iron oxide particles and said auxiliary filler when the binder comprises bituminous material; or from 5 to 300 parts by weight, per 100 parts by weight of binder, of each of said mica, said iron oxide particles and said auxiliary filler when the binder comprises an ethylene-vinyl acetate copolymer, polyvinyl acetate or a mixture thereof.

3. A sheet according to claim 1 or 2, wherein said binder contains not less than 20% by weight of the bituminous material.

4. A sheet according to claim 1 or 2, wherein said binder contains not less than 5% by weight of the ethylene-vinyl acetate copolymer, polyvinyl acetate or mixture thereof.

5. A sheet according to any one of the preceding claims wherein the content of vinyl acetate in the said ethylenevinyl acetate copolymer is from 25 to 50%.

6. A sheet according to any one of the preceding claims, wherein the size of the mica is not greater than 350 μm.

7. A sheet according to any one of the preceding claims, wherein the particle size of the iron oxide particles is from 0.05 to 100 μm.

8. A sheet according to any one of the preceding claims, wherein the blending ratio (by weight) of the iron oxide particles to the mica is from 0.1 - 10 : 1.

## Patentansprüche

1. Dämpfungsfolie für Fahrzeuge umfassend eine Mischung, die
   (1) einen Füllstoff, der sich aus Mika, Eisenoxid-Teilchen und einem Hilfs-Füllstoff zusammensetzt, und
   (2) ein Bindemittel enthaltend
   (a) ein Bitumenmaterial oder (b) ein Ethylen-Vinylacetat-Copolymer, Polyvinylacetat oder ein Gemisch davon, enthält, wobei die Mengen an Mika, Eisenoxid-Teilchen und Hilfs-Füllstoff jeweils nicht weniger als 5 Gewichtsteile pro 100 Gewichtsteile Bindemittel ausmachen; die Gesamtmenge an Eisenoxid-Teilchen und Hilfsfüllstoff nicht weniger als 30 Gew. Teile pro 100 Gewichtsteile Bindemittel ausmachen; und der Gehalt an Eisenoxidteilchen in der Mischung zwischen 2 und 40 Gew.% liegt.

2. Folie nach Anspruch 1, bei der die Mischung jeweils 5 bis 100 Gewichtsteile Mika, Eisenoxid-Teilchen und Hilfs-Füllstoff pro 100 Gewichtsteile Bindemittel enthält, wenn das Bindemittel Bitumenmaterial umfaßt; oder 5 bis 300 Gewichtsteile Mika, Eisenoxid-Teilchen und Hilfs-Füllstoff pro 100 Gewichtsteile Bindemittel enthält, wenn das Bindemittel ein Ethylen-Vinylacetat-Copolymer, Polyvinylacetat oder ein Gemisch der genannten umfaßt.

3. Folie nach Anspruch 1 oder 2, bei der das Bindemittel nicht weniger als 20 Gewichts-% Bitumenmaterial enthält.

4. Folie nach Anspruch 1 oder 2, bei der das Bindemittel nicht weniger als 5 Gew.% Ethylen-VinylacetatCopolymer, Polyvinylacetat oder Gemisch der genannten enthält.

5. Folie nach einem der vorangehenden Ansprüche, bei der der Vinylacetat-Gehalt in dem Ethylen-Vinylacetat-Copolymer 15 bis 50 Gewichts-% beträgt.

6. Folie nach einem der vorangehenden Ansprüche, bei der die Größe des Mika nicht mehr als 350 µm ist.

7. Folie nach einem der vorangehenden Ansprüche, bei der die die Teilchengröße der Eisenoxid-Teilchen 0,05 bis 100 µm ist.

8. Folie nach einem der vorangehenden Ansprüche, bei der das Mischungsverhältnis (Gewichtsteile) der Eisenoxidteilchen zu dem Mika 0,1 - 10:1 ist.

**Revendications**

1. Feuille d'amortissement pour véhicules comprenant un mélange comprenant :
   (1) une charge composée de mica, de particules d'oxyde de fer et d'une charge auxiliaire, et
   (2) un liant comprenant (a) une matière bitumineuse ou (b) un copolymère éthylène-acétate de vinyle, un polyacétate ou vinyleou un mélange d'entre eux,
   chacune des quantités dudit mica, desdites particules d'oxyde de fer et de ladite charge auxiliaire étant d'au moins 5 parties en poids pour 100 parties en poids dudit liant ; la quantité totale dudit mica, desdites particules d'oxyde de fer et de ladite charge auxiliaire étant d'au moins 30 parties en poids pour 100 parties en poids dudit liant ; et la proportion desdites particules d'oxyde de fer dans ledit mélange étant de 2 à 40 % en poids.

2. Feuille selon la revendication 1, dans laquelle le mélange comprend 5 à 100 parties en poids, pour 100 parties en poids de liant, de chacun dudit mica, desdites particules d'oxyde de fer et de ladite charge auxiliaire lorsque le liant comprend une matière bitumineuse ; ou 5 à 300 parties en poids, pour 100 parties en poids de liant, de chacun dudit mica, desdites particules d'oxyde de fer et de ladite charge auxiliaire lorsque le liant comprend un copolymère éthylène-acétate de vinyle, un polyacétate de vinyle ou un mélange d'entre eux.

3. Feuille selon la revendication 1 ou 2, dans laquelle ledit liant contient au moins 20 % en poids de la matière bitumineuse.

4. Feuille selon la revendication 1 ou 2, dans laquelle ledit liant contient au moins 5 % en poids du copolymère éthylène-acétate de vinyle, du polyacétate de vinyle ou de leur mélange.

5. Feuille selon l'une quelconque des revendications précédentes, dans laquelle la proportion d'acétate de vinyle dans ledit copolymère éthylène-acétate de vinyle est de 25 à 50 %.

6. Feuille selon l'une quelconque des revendications précédentes, dans laquelle la grosseur du mica est d'au plus 350 µm.

7. Feuille selon l'une quelconque des revendications précédentes, dans laquelle la taille des particules d'oxyde de fer est de 0,05 à 100 µm.

8. Feuille selon l'une quelconque des revendications précédentes, dans laquelle le rapport de mélange (en poids) des particules d'oxyde de fer au mica est de 0,1:1 à 10:1.

# Fig. 1

# Fig. 2

# Fig. 3